# EUROPEAN PATENT APPLICATION

(11) **EP 4 697 612 A1**
(43) Date of publication of application: **18.02.2026**
(21) Application number: 23932454.4
(22) Date of filing: 13.04.2023
(51) Int. Cl.: H04B 5/00, H04L 69/24

(54) **WIRELESS COMMUNICATION METHOD, NETWORK DEVICE, AND ENVIRONMENTAL ENERGY AMP DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Penza, Giancarlo
(86) International application number: PCT/CN2023/088053
(87) International publication number: WO 2024/212163

(57) **Abstract**

A wireless communication method, a network device, and an environmental energy AMP device, which are beneficial to ensuring normal communication between a network device and a zero-power-consumption device. The method comprises: a network device sending capability information of the network device to an environmental energy AMP device.

## Description

### TECHNICAL FIELD

Embodiments of the present disclosure relate to the field of communication, in particular to a wireless communication method, a network device, and an ambient power (AMP) device.

### BACKGROUND

Zero-power terminals, due to their significant advantages such as extremely low cost, zero power consumption, and small size, can be widely applied in various industries such as logistics for vertical industries, smart warehousing, smart agriculture, energy and power, industrial Internet, smart wearable, smart home and other personal applications, etc. Since the capabilities of zero-power terminals are different from those of traditional terminals, and different zero-power terminals may have different types or capabilities, how to establish connection of a zero-power device to ensure normal communication between the network device and the zero-power terminal is an urgent problem to be solved.

### SUMMARY

The present disclosure provides a wireless communication method, a network device, and an ambient power (AMP) device, which are beneficial to ensuring normal communication between the network device and the zero-power device.

In a first aspect, there is provided a wireless communication method. The method includes the following operation.

A network device sends capability information of the network device to an ambient power (AMP) device.

In a second aspect, there is provided a wireless communication method. The method includes the following operation.

An ambient power (AMP) device receives capability information of a network device from the network device.

In a third aspect, there is provided a network device for performing the method of the above first aspect or implementations thereof.

Specifically, the network device includes a functional module for performing the method in the above first aspect or implementations thereof.

In a fourth aspect, there is provided an ambient power (AMP) device for performing the method of the above second aspect or implementations thereof.

Specifically, the AMP device includes a functional module for performing the method in the above second aspect or implementations thereof.

In a fifth aspect, there is provided a network device including a processor and a memory. The memory is configured to store a computer program, and the processor is configured to call and run the computer program stored in the memory to perform the method in the above first aspect or implementations thereof.

In a sixth aspect, there is provided an AMP device including a processor and a memory. The memory is configured to store a computer program, and the processor is configured to call and run the computer program stored in the memory to perform the method in the above second aspect or implementations thereof.

In a seventh aspect, there is provided a chip for implementing the method in any one of the first aspect and the second aspect described above or implementations thereof.

Specifically, the chip includes a processor. The processor is configured to call and run a computer program from a memory, to cause a device installed with the chip to perform the method in any one of the first aspect and the second aspect described above or implementations thereof.

In an eighth aspect, there is provided a computer-readable storage medium for storing a computer program. The computer program causes a computer to perform the method in any one of the first aspect and the second aspect described above or implementations thereof.

In a ninth aspect, there is provided a computer program product including computer program instructions. The computer program instructions cause a computer to perform the method in any one of the first aspect and the second aspect described above or implementations thereof.

In a tenth aspect, there is provided a computer program. The computer program, when executed on a computer, causes the computer to perform the method in any one of the first aspect and the second aspect described above or implementations thereof.

According to the above technical solutions, the network device can send the capability information of the network device to the zero-power device, and further, the AMP device can select an appropriate network device to establish connection according to the capability information of the network device, thereby ensuring normal communication between the AMP device and the network device.

### BRIEF DESCRIPTION OF THE DRAWINGS

FIG. 1 is a schematic diagram of a communication system architecture according to an embodiment of the present disclosure.
FIG. 2 is a schematic diagram of a zero-power communication system according to an example of the present disclosure.
FIG. 3 is a schematic diagram of power harvesting according to an embodiment of the present disclosure.
FIG. 4 is a schematic diagram of back scattering according to an embodiment of the present disclosure.
FIG. 5 is a circuit schematic diagram of resistance load modulation according to an embodiment of the present disclosure.
FIG. 6 is a schematic diagram of a wireless communication method according to an embodiment of the present disclosure.
FIG. 7 is a schematic diagram of a signal generation method according to an embodiment of the present disclosure.
FIG. 8 is a schematic diagram of another signal generation method according to an embodiment of the present disclosure.
FIG. 9 is a schematic diagram of another signal generation method according to an embodiment of the present disclosure.
FIG. 10 is a schematic block diagram of a network device according to an embodiment of the present disclosure.
FIG. 11 is a schematic block diagram of an AMP device according to an embodiment of the present disclosure.
FIG. 12 is a schematic block diagram of a communication device according to an embodiment of the present disclosure.
FIG. 13 is a schematic block diagram of a chip according to an embodiment of the present disclosure.
FIG. 14 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure. It is apparent that the described embodiments are not all embodiments but only part of embodiments of the present disclosure. All other embodiments obtained by those of ordinary skill in the art on the basis of the embodiments in the present disclosure without creative work shall fall within the scope of protection of the present disclosure.

The technical solution of embodiments of the present disclosure may be applied to various communication systems, such as: a Global System of Mobile communication (GSM), a Code Division Multiple Access (CDMA) system, a Wideband Code Division Multiple Access (WCDMA) system, General Packet Radio Service (GPRS), a Long Term Evolution (LTE) system, an Advanced long term evolution (LTE-A) system, a New Radio (NR) system, an evolution system of NR system, a LTE-based access to unlicensed spectrum (LTE-U) system, a NR-based access to unlicensed spectrum (NR-U) system, a Non-Territorial Networks (NTN) system, a Universal Mobile Telecommunication System (UMTS), Wireless Local Area Networks (WLAN), Wireless Fidelity (WiFi), a 5th-Generation (5G) system, a cellular Internet of Things system, a cellular passive Internet of Things system, or other communication systems.

Generally speaking, conventional communication systems support a limited number of connections and are easy to be implemented. However, with the development of communication technology, mobile communication systems will not only support traditional communication, but also support, for example, device to device (D2D) communication, machine to machine (M2M) communication, machine type communication (MTC), Vehicle to Vehicle (V2V) communication, or Vehicle to everything (V2X) communication, etc., and the embodiments of the present disclosure may also be applied to these communication systems.

In an embodiment, the communication system of the present disclosure may be applied to a carrier aggregation (CA) scenario, a dual connectivity (DC) scenario, or an independent standalone (SA) networking scenario.

In an embodiment, the communication system of the present disclosure may be applied to an unlicensed spectrum considered as a shared spectrum. Alternatively, the communication system of the present disclosure may also be applied to a licensed spectrum considered as an unshared spectrum.

Embodiments of the present disclosure describe various embodiments in combination with a network device and a terminal device. The terminal device may also be called a user equipment (UE), an access terminal, a user unit, a user station, a mobile station, a mobile platform, a remote station, a remote terminal, a mobile device, a user terminal, a terminal, a wireless communication device, a user agent or user apparatus, etc.

In embodiments of the present disclosure, the network device may be a device configured to communicate with a mobile device. The network device may be an access point (AP) in WLAN, a base transceiver station (BTS) in GSM or CDMA, a NodeB (NB) in WCDMA, an evolutional NodeB (eNB or eNodeB) in LTE, a relay station or access point, an on-board device, a wearable device, a gNB in NR networks, a network device in cellular Internet of Things, a network device in cellular passive Internet of Things, a network device in a future evolved Public Land Mobile Network (PLMN), or a network device in a NTN network, etc.

As an example without limitation, in embodiments of the present disclosure, the network device may have a mobility characteristic, for example, the network device may be a mobile device. In an embodiment, the network device may be a satellite or balloon station. For example, the satellite may be a low earth orbit (LEO) satellite, a medium earth orbit (MEO) satellite, a geostationary earth orbit (GEO) satellite, or a high elliptical orbit (HEO) satellite, etc. In an embodiment, the network device may also be a base station set at land, water, or other locations.

In embodiments of the present disclosure, the network device may provide services for a cell, and the terminal device communicates with the network device through transmission resources (for example, frequency domain resources, or spectrum resources) used by the cell. The cell may be a cell corresponding to the network device (for example, a base station). The cell may belong to a macro base station or a base station corresponding to a small cell. The small cell here includes a Metro cell, a Micro cell, a Pico cell, and a Femto cell, etc. These small cells have characteristics of small coverage and low transmission power, and are suitable for providing high-speed data transmission services.

The terminal device may be a station (ST) in WLAN, a cellular phone, a cordless phone, a session initiation protocol (SIP) phone, a wireless local loop (WLL) station, a personal digital assistant (PDA) device, a handheld device with wireless communication functions, a computing device, or other processing device connected to a wireless modem, an on-board device, a wearable devices, a next-generation communication system such as a terminal device in NR network, or a terminal device in the future future evolved PLMN network, etc.

In embodiments of the present disclosure, the terminal device may be deployed in land, including indoor or outdoor, handheld, wearable, or vehicle-mounted. The terminal device may also be deployed in the water (such as in ships, etc.). The terminal device may also be deployed in the air (such as in aircraft, in balloons, or in satellites, etc.).

In embodiments of the present disclosure, the terminal device may be a mobile phone, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in a smart grid, a wireless terminal device in transportation safety, a wireless terminal device in smart city, or a wireless terminal device in smart home, etc.

As an example without limitation, in embodiments of the present disclosure, the terminal device may also be a wearable device. The wearable device may also be called a wearable smart device, which is a general name of wearable devices applying wearable technology to intelligently design daily wear and develop wearable devices, such as a glass, a glove, a watch, clothing and a shoe, etc. The wearable device is a portable device that is directly worn on the body or integrated into the user's clothes or accessories. The wearable device is not only a hardware device, but also realizes powerful functions through software support, data interaction and cloud interaction. The generalized wearable smart device has full functions, large size, complete or partial functions that may be implemented without relying on smart phones, the generalized wearable smart device may be a smart watch or a smart glass, etc. The generalized wearable smart device may only focus on certain application functions, and needs to be used together with other devices such as a smart phone, for example, various smart bracelets and smart jewelry for sign monitoring.

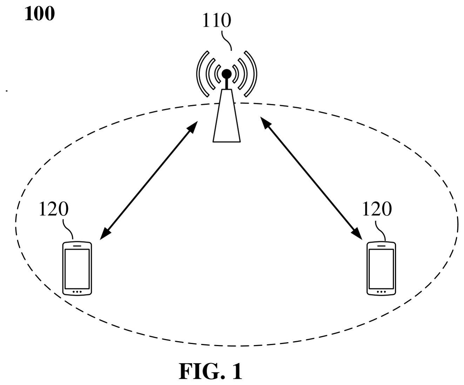

Exemplarily, the communication system 100 to which the embodiments of the present disclosure are applied is illustrated in FIG. 1. The communication system 100 may include a network device 110. The network device 110 may be a device that communicates with a terminal device 120 (or referred to as a communication terminal or terminal). The network device 110 may provide communication coverage for a particular geographic area and may communicate with terminal devices located within the coverage area.

FIG. 1 exemplarily illustrates one network device and two terminal devices. In an embodiment, the communication system 100 may include a plurality of network devices, and other numbers of terminal devices may be included within the coverage of each network device, which is not limited in the embodiments of the present disclosure.

In an embodiment, the communication system 100 may also include other network entities, such as a network controller, a mobility management entity, or the like, which is not limited in the embodiments of the present disclosure.

It is to be understood that a device with the communication function in a network/system in the embodiments of the present disclosure may be referred to as a communication device. Taking the communication system 100 illustrated in FIG. 1 as an example, the communication device may include a network device 110 and a terminal device 120 with the communication function. The network device 110 and the terminal device 120 may be specific devices described above and will not be elaborated herein. The communication device may also include other devices in the communication system 100, such as a network controller, a mobility management entity, and other network entities, which is not limited in the embodiments of the present disclosure.

It is to be understood that the terms "system" and "network" in the present disclosure are often used interchangeably herein. The term "and/or" is only an association relationship describing associated objects and represents three relationships. For example, A and/or B may represent the following three cases: independent existence of A, existence of both A and B, and independent existence of B. In addition, the character "/" in the present disclosure generally represents that previous and next associated objects form an "or" relationship.

It is to be understood that the term "indication" mentioned in the embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B.

In the description of the embodiments of the present disclosure, the term "correspondence" may indicate that there is a direct correspondence or indirect correspondence between two elements, or may indicate that there is an association relationship between the two elements, or may indicate a relationship between indicating and being indicated, or between configuring and being configured, etc.

In the embodiments of the present disclosure, "predefined" may be implemented by pre-storing the corresponding codes, tables, or other manners for indicating relevant information in the device (including, for example, the terminal device and the network device), and the specific implementations thereof are not limited in the present disclosure. For example, "predefined" may refer to those defined in a protocol.

In the embodiments of the present disclosure, the "protocol" may refer to a standard protocol in the field of communication, which may include, for example, an LTE protocol, NR protocol and relevant protocol applied in the future communication system, which is not limited in the present disclosure.

In order to facilitate understanding of the technical solutions of the embodiments of the present disclosure, related techniques of the present disclosure will be described.

### 1. Zero power communication

The key technologies of zero power communication include power harvesting, back scattering and low power technology.

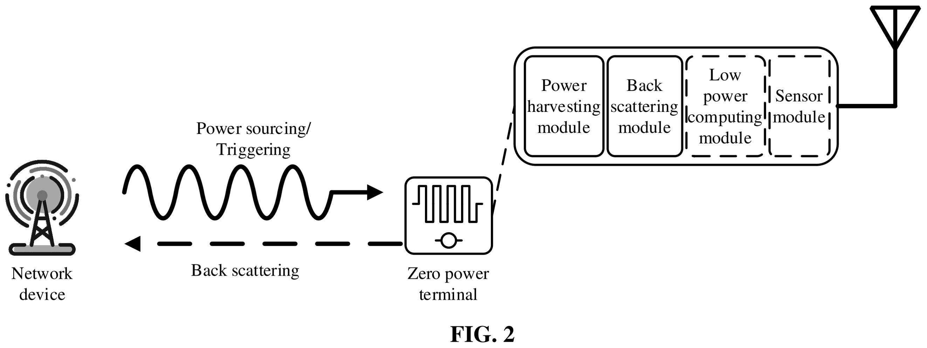

As illustrated in FIG. 2, a typical zero power communication system (e.g., a radio frequency identification (RFID) system) includes a network device (e.g., a reader-writer of an RFID system) and a zero power terminal (e.g., an electronic tag). The network device is used for transmitting a wireless power sourcing signal, a downlink communication signal to the zero power terminal and receiving a backscatter signal from the zero power terminal. A basic zero power terminal includes a power harvesting module, a back scattering module and a low power computing module. In addition, the zero power terminal may also be provided with a memory or a sensor for storing some basic information (such as an object identifier, etc.) or sensing data such as ambient temperature and ambient humidity.

For example, the power harvesting module can harvest energy carried by radio waves in space (radio waves emitted by the network device illustrated in FIG. 2) for driving the low power computing module of the zero-power terminal and realizing back scattering. After obtaining energy, the zero power terminal may receive a control command of the network device and transmit data to the network device in a backscatter\ manner based on the control command. The transmitted data may be data stored by the zero power terminal itself (such as identity identification or pre-written information, such as a production date, brand, manufacturer, or the like of the commodity). The zero-power terminal may also load various sensors, so as to report data collected by various sensors based on the zero-power mechanism.

The key technologies of zero-power communication will be described below.

### 1. RF Power Harvesting

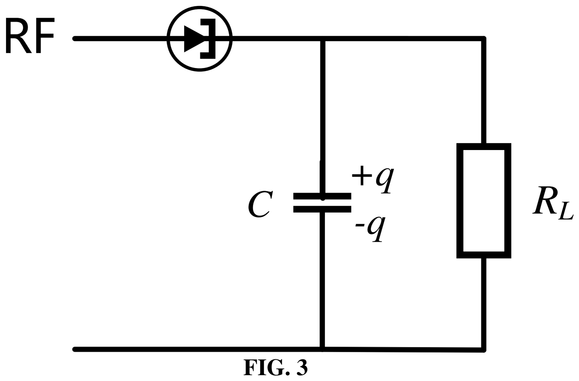

As illustrated in FIG. 3, the RF power harvesting module harvests space electromagnetic wave power based on the principle of electromagnetic induction, and then obtains the power required to drive the zero power terminal, such as driving a low-power demodulation and modulation module, sensor and memory reading, etc. Therefore, the zero power terminal does not require traditional batteries.

### 2. Back Scattering

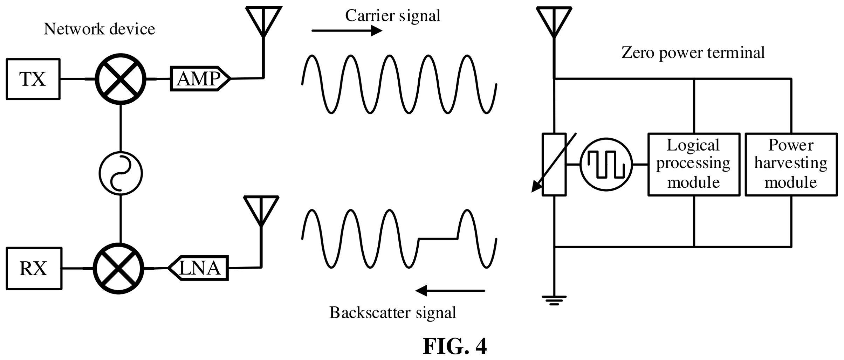

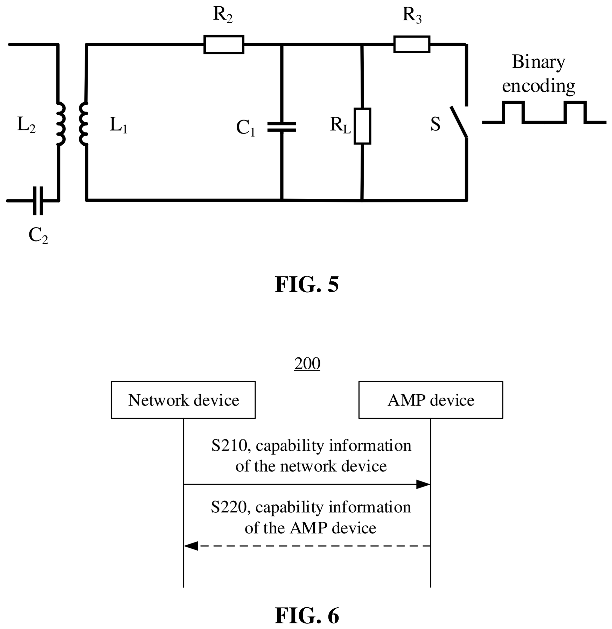

As illustrated in FIG. 4, the zero-power terminal receives a carrier signal sent by the network device, modulates the carrier signal, loads information to be sent, and radiates the modulated signal from the antenna. This information transmission process is called back scattering. The back scattering is closely related to the function of load modulation. The load modulation adjusts and controls circuit parameters of the oscillation loop of the zero power terminal according to the beat of the data stream to cause a parameter such as the magnitude of the impedance of the zero power terminal to change accordingly, thereby completing the modulation process. The load modulation technology mainly includes resistance load modulation and capacitance load modulation. As illustrated in FIG. 5, in the resistance load modulation, the load is connected in parallel with a resistor, and the resistor is turned on or off based on the control of the binary data stream. The on-off of the resistor will cause the change of the circuit voltage, so Amplitude Shift Keying (ASK) is realized, that is, the signal modulation and transmission are realized by adjusting the amplitude of the backscatter signal of the zero power terminal. Similarly, in the capacitance load modulation, the resonance frequency of the circuit may be changed by on-off of the capacitor, so Frequency Shift Keying (FSK) is realized, that is, the signal modulation and transmission are realized by adjusting the operating frequency of the backscatter signal of the zero power terminal.\

The zero power terminal performs information modulation on the incoming signal by means of load modulation, thereby implementing the back scattering process. Therefore, the zero power terminal has the following significant advantages:
(1) the zero power terminal does not actively transmit signals, and therefore does not require complex radio frequency links such as a power amplifier (PA), radio frequency filter, etc.;
(2) the zero power terminal does not need to actively generate high-frequency signals, and therefore does not need a high-frequency crystal oscillator;
(3) With the help of back scattering, terminal signal transmission does not need to consume the terminal's own energy.

### 3. Coding technology

The data transmitted by the zero power terminal may use different forms of codes to represent "1" and "0" in binary (i.e., binary "1" and "0"). A radio frequency identification system typically uses one of the following coding methods: Non Return Zero (NRZ) coding, Manchester coding, Unipolar RZ coding, differential bi-phase (DBP) coding, differential coding, pulse interval encoding (PIE), bi-phase space encoding (FM0), Miller coding and differential coding, etc. Different coding techniques use different pulse signals to represent 0 and 1.

Zero power communication, due to its significant advantages such as extremely low cost, zero power consumption, and small size, can be widely used in various industries, such as logistics for vertical industries, smart warehousing, smart agriculture, energy and power, industrial Internet, etc., and can also be applied to personal application such as smart wearable and smart home.

In some scenarios, based on the power source and usage mode of the zero-power terminals, the zero-power terminals may be classified into the following types.

### 1. Passive zero-power terminal

A zero power terminal (such as an electronic tag of a RFID system) does not require a built-in battery. When the zero power terminal approaches a network device (such as a reader-writer of the RFID system), the zero power terminal is in the near-field range formed by radiation of an antenna of the network device. The antenna of the zero power terminal generates induced current through electromagnetic induction. The induced current drives the low power chip circuit of the zero power terminal to operate, so as to realize signal demodulation of the forward link, signal modulation of the backward link (or referred as reflection link), and the like. For the backscatter link, the zero power terminal uses the backscatter implementation to perform signal transmission.

It can be seen that the passive zero power terminal does not require a built-in battery to drive neither the forward link nor the backward link, and is a true zero power terminal.

Since the passive zero power terminal does not require batteries, the radio frequency circuit and baseband circuit of the passive zero power terminal are very simple, for example, a Low Noise Amplifier (LNA), a Power Amplifier (PA), a crystal oscillator, an Analog-to-Digital Converter (ADC), etc., are not required, so the passive zero power terminal has many advantages such as small size, light weight, low price and long service life.

### 2. Semi-passive zero-power terminal

A semi-passive zero power terminal itself is not equipped with a conventional battery, but can use a RF power harvesting module to harvest radio wave power and store the harvested power in a power storage unit (such as a capacitor). After obtaining power, the power storage unit can drive the low power chip circuit of the zero power terminal to operate, so as to realize signal demodulation of the forward link and signal modulation of the backward link. For the backscatter link, the zero power terminal uses the backscatter implementation to perform signal transmission.

It can be seen that the semi-passive zero power terminal does not require a built-in battery to drive neither the forward link nor the backward link. Although the power stored by the capacitor is used in operation, the power comes from the power of radio waves harvested by the power harvesting module, so the semi-passive zero power terminal is also a true zero power terminal.

The semi-passive zero power terminal inherits many advantages of the passive zero power terminal, so it has many advantages such as small size, light weight, low price and long service life.

### 3. Active zero-power terminal

Zero power terminals used in some scenarios may also be active zero power terminals. Such devices may be equipped with built-in batteries. The battery is used to drive the low power chip circuit of the zero power terminal to operate, so as to realize signal demodulation of the forward link and signal modulation of the backward link. However, for the backscatter link, the zero power terminal uses the backscatter implementation to perform signal transmission. Therefore, zero power of devices of this type is mainly reflected in the fact that the signal transmission of the backward link does not require the power of the terminal itself, but uses the backscatter manner.

The active zero power terminal provides power to the RFID chip by a built-in battery, so as to increase reading and writing distance of the active zero power terminal and improve the reliability of communication. Therefore, the active zero power terminal may be applied in some scenarios that have relatively high requirements for the communication distance and communication delay.

In some scenarios, zero power devices may be classified into the following types based on the transmitter type.

### 1) Zero-power device based on backscatter transmitter

Such zero power devices transmit uplink data using the above backscatter method. Such zero power devices do not have an active transmitter that actively transmits, but only a backscatter transmitter. Therefore, when the zero power device of this type transmits data, the network device needs to provide a carrier, and the zero power device performs backscattering based on the carrier to realize data transmission.

### 2) Zero power device based on active transmitter

Such zero-power devices use an active transmitter with active transmission capability for uplink data transmission. Therefore, when the zero-power device of this type transmits data, the zero-power device can transmit data by using its own active transmitter without requiring the network device to provide a carrier. The active transmitter suitable for the zero power device may be, for example, an ultra-low power ASK transmitter, an ultra-low power FSK transmitter, or the like, and when a signal of 100 uw is transmitted, the overall power consumption can be reduced to 400 uw to 600 uw.

### 3) Zero power device with both backscatter transmitter and active transmitter

Such zero-power devices can support both backscatter transmitters and active transmitters. The zero-power device of this type can determine which signal transmission mode to use according to different situations (such as power level, available ambient energy) or based on scheduling of the network device, that is, using the active transmitter or backscatter transmitter for signal transmission.

With the vigorous development of the Internet of Things (IoT), existing IoT communication technologies can no longer meet the IoT communication needs in many scenarios, such as:

### 1. Harsh communication environment

Some IoT scenarios may face extreme environments such as high temperature, extremely low temperature, high humidity, high pressure, high radiation or high-speed movement. These scenarios may be such as ultra-high voltage substations, high-speed train track monitoring, environmental monitoring in alpine zones, industrial production lines, etc. In these scenarios, existing IoT terminals will not work due to the operation environment limitations of conventional power supplies. In addition, extreme operation environments are not conducive to IoT maintenance, such as battery replacement.

### 2. Extremely small terminal form requirements

Some IoT communication scenarios, such as food traceability, commodity circulation, and smart wearables, require terminals to have extremely small sizes to facilitate use in these scenarios. For example, IoT terminals used for commodity management in the circulation link usually use the form of electronic tags and are embedded into commodity packaging in a very compact form. For another example, lightweight wearable devices can improve user experience while meeting user needs.

### 3. Extremely low-cost IoT communication requirements

Numerous IoT communication scenarios require the cost of IoT terminals to be low enough to improve competitiveness relative to other alternative technologies. For example, in logistics or warehousing scenarios, in order to facilitate the management of a large number of circulating items, each item may be attached with an IoT terminal , so as to complete the accurate management of the entire logistics process and cycle through the communication between the terminal and the logistics network. These scenarios require the price of IoT terminals to be competitive enough.

Therefore, in order to cover these unmet IoT communication requirements, cellular networks also need to develop ultra-low-cost, extremely small-size, battery-free/maintenance-free IoT, and zero-power IoT can meet this demand.

The zero-power Internet of Things (IoT) may also be referred to as Ambient power enabled IoT (Ambient IoT or AMP IoT). Zero power devices may also be referred to as Ambient IoT devices or AMP IoT devices. Ambient IoT devices may refer to IoT devices that use various ambient energy, such as wireless radio frequency energy, light energy, solar energy, thermal energy, mechanical energy and other ambient energy. Such devices may have no energy storage capability or may have very limited energy storage capability, such as using capacitors with a capacity of tens of uF.

Ambient IoT may be used in at least the following four types of scenarios:
1. Object recognition, such as logistics, production line product management, and supply chain management;
2. Environmental monitoring, such as temperature, humidity and harmful gas monitoring of working environment and natural environment;
3. Positioning, such as indoor positioning, intelligent object search, production line item positioning, etc.;
4. Intelligent control, such as intelligent control of various electrical appliances in smart homes (turning on and off air conditioners, adjusting temperature), and intelligent control of various facilities in agricultural greenhouses (automatic watering, fertilization).

Zero-power terminals, due to their significant advantages such as extremely low cost, zero power consumption, and small size, can be widely applied in various industries such as logistics for vertical industries, smart warehousing, smart agriculture, energy and power, industrial Internet, smart wearable, smart home and other personal applications, etc. Since the capabilities of zero-power terminals are different from those of traditional terminals, and different zero-power terminals may have different types or capabilities, how a network device establishes connection with a zero-power device to realize communication with the zero-power terminal is an urgent problem to be solved.

In order to facilitate understanding of the technical solutions of the embodiments of the present disclosure, the technical solutions of the present disclosure will be described in detail below with reference to specific embodiments. The above relevant technology as optional solutions may be combined with the technical solutions of the embodiments of the present disclosure in any way, and shall fall within the scope of protection of the embodiments of the present disclosure. The embodiments of the present disclosure include at least part of the following contents.

FIG. 6 is a schematic interaction diagram of a wireless communication method 200 according to an embodiment of the present disclosure. As illustrated in FIG. 6, the method 200 includes at least part of the following contents.

In S210, a network device transmits capability information of the network device to an ambient power (AMP) device.

Correspondingly, the AMP device receives capability information of the network device.

In some embodiments, the capability information of the network device may be transmitted in a broadcast manner, a multicast manner, or a unicast manner.

In embodiments of the present disclosure, an AMP device is referred to as an Ambient IoT device, an AMP IoT device, a zero-power device, or a zero-power terminal.

It should be noted that, in the embodiments of the present disclosure, the naming of the AMP device does not limit its power source, and for example, the energy required for operation may come from radio frequency energy, light energy, solar energy, thermal energy, mechanical energy, and the like.

In some embodiments, the network device may be a base station in a cellular communication system, for example, a gNB in an NR system, or an AP in a WIFI system, or a Relay Node, etc., which is not limited in the present disclosure.

In some embodiments, AMP devices may be separated into Multiple types according to their capabilities. Different types of AMP devices may have corresponding complexity and communication capability.

In some embodiments, the capability of the AMP device may include at least one of: a capability related to energy storage of the AMP device, such as whether the AMP device has an energy storage capability, the size of the energy storage capability, etc.; a capability related to power harvesting of the AMP device, such as a power harvesting mode supported by the AMP device, for example, supporting power harvesting based on a power sourcing signal; or, a capability related to signal transmission of the AMP device, such as whether the AMP device supports active signal transmission, supported signal modulation modes, supported signal coding schemes, supported signal generation schemes, etc.

In some specific embodiments, the types of AMP devices include at least one of the following types: first-type AMP devices, second-type AMP devices, or third-type AMP devices.

A first-type AMP device (denoted as device A) does not have the energy storage capability and does not support active signal transmission, that is, the first-type AMP device adopts a back scattering mode.

A second-type AMP device (denoted as device B) has the energy storage capability and does not support active signal transmission.

A third-type AMP device (denoted as device C) has the energy storage capability and supports active signal transmission.

In some embodiments, the second-type AMP device may utilize the stored energy to amplify the backscatter signal.

In some embodiments, the third-type AMP device may support the back scattering mode.

In some embodiments, the first-type AMP device has the lowest complexity and power consumption, with the power consumption as low as 1 microwatt (µW), but has a limited communication distance, typically only a few meters. The first-type AMP device requires the network device to provide a carrier signal for backscattering transmission. The third-type AMP device generally has large-capacity capacitors to store energy with supporting power consumption of several hundred µW, can support active signal transmission, and have a large communication distance. The third-type AMP device can perform active transmission and thus does not need the network device to provide a carrier signal. The complexity and power consumption of the second-type AMP device are between the first-type AMP device and the third-type AMP device.

In some embodiments, the capability information of the network device may include capability information related to an AMP device to which the network device supports access, and/or capability information related to a communication mode used by the network device to support communication with the AMP device.

In some embodiments, the capability information related to the AMP device to which the network device supports access may include at least one of the following: a type of AMP devices supported by the network device; whether the network device supports providing a power sourcing signal for power harvesting; or, whether the network device supports providing a carrier signal for backscattering.

In some embodiments, the capability information related to the communication mode used by the network device to support communication with the AMP device may include at least one of the following: a modulation mode supported by the network device; a coding scheme supported by the network device; a signal generation scheme supported by the network device; or, wireless air interface technology supported by the network device.

In some specific embodiments, the capability information of the network device includes at least one of: a type of AMP devices to which the network device supports access; whether the network device supports providing a power sourcing signal for power harvesting; whether the network device supports providing a carrier signal for backscattering; a modulation mode supported by the network device; a coding scheme supported by the network device; or, a signal generation scheme supported by the network device.

In some embodiments, the type of AMP devices to which the network device supports access may include, but is not limited to, one or more types of a plurality of AMP device types classfied according to the capabilities of the AMP devices.

As an example, the type of AMP devices to which the network device supports access include at least one of: the first-type AMP device, second-type AMP device, or third-type AMP device.

In some specific embodiments, the capability information of the network device indicates access of at least one of the following types of AMP devices: the first-type AMP device, second-type AMP device, or third-type AMP device.

In some embodiments, since the first-type AMP device only supports the back scattering mode, the network device needs to support providing a carrier signal for backscattering for access of such type of AMP device.

In some embodiments, since the second-type AMP device has the energy storage capability, such as performing power harvesting based on wireless radio frequency energy, and only supports the back scattering mode, the network device needs to support providing a power sourcing signal for power harvesting and a carrier signal for backscattering for access to such type of AMP device.

In some embodiments, since the third-type AMP device has the energy storage capability, such as performing power harvesting based on wireless radio frequency energy, the network device needs to support providing a power sourcing signal for power harvesting for access to such type of AMP device.

In some embodiments, the network device supporting access to the first-type AMP device indicates that the network device supports providing a carrier signal.

In some embodiments, the network device supporting access to the second-type AMP device indicates that the network device supports providing a power sourcing signal (where the second-type device performs power harvesting based on wireless radio frequency energy) and supports providing a carrier signal.

In some embodiments, the network device supporting access to the third-type AMP device indicates that the network device supports providing a power sourcing signal.

That is, when the network device supports providing the carrier signal, the network device supports the access to the first-type AMP device and the second-type AMP device, and when the network device supports providing the power sourcing signal, the network device supports the access to the second-type AMP device and the third-type AMP device.

In some embodiments, the modulation mode supported by the network device may refer to a modulation scheme supported by the communication between the network device and the AMP device.

In some embodiments, a modulation mode supported by the network device corresponds to a modulation mode supportable by an AMP device of a target type, where the target type is a type of AMP device to which the network device supports access. That is, if the network device supports a certain modulation mode, the network device can support the access to the corresponding type of AMP device.

In some embodiments, the modulation mode supported by the network device may be a single carrier-based modulation mode or a multi-carrier (MC)-based modulation mode.

In some embodiments, one or more modulation modes supported by the network device may include, but are not limited to, at least one of the following: On-Off Keying (OOK), Frequency-shift keying (FSK), or Phase Shift Keying (PSK).

In some embodiments, one or more modulation modes supported by the network device include, but are not limited to, at least one of the following: MC-OOK, MC-FSK, or MC-PSK.

In some embodiments, the coding scheme supported by the network device may refer to the coding scheme supported by the communication between the network device and the AMP device.

In some embodiments, a coding scheme supported by the network device corresponds to a coding scheme supportable by an AMP device of a target type, where the target type is a type of AMP device to which the network device supports access. That is, if the network device supports a certain coding scheme, the network device can support the access to the corresponding type of AMP device.

In some embodiments, one or more coding schemes supported by the network device may include, but are not limited to, at least one of the following: Non Return Zero (NRZ) coding, Manchester coding, Unipolar RZ coding, differential bi-phase (DBP) coding, differential coding, pulse interval encoding (PIE), bi-phase space encoding (FM0), or differential Miller coding.

In some embodiments, the signal generation scheme supported by the network device may refer to a generation method for signal waveform, including for example, but not limited to, a modulation mode of information to be transmitted, a resource mapping mode of modulation symbols, a processing mode of modulation symbols, and the like.

In some embodiments, a signal generation scheme supported by the network device corresponds to a signal reception mode supported by an AMP device of a target type, where the target type is the type of AMP device supported by the network device to access. That is, if the network device supports a certain signal generation scheme, the network device can support the access to the corresponding type of AMP device.

In some embodiments, the signal generation scheme supported by the network device may include a generation scheme of MC-ASK waveform, or may include a generation scheme of MC-FSK waveform, a generation scheme of MC-PSK waveform, or the like.

In some embodiments, the generation scheme of MC-ASK waveform includes, but not limited to, at least one of: a first MC-ASK waveform generation scheme, a second MC-ASK waveform generation scheme, a third MC-ASK waveform generation scheme, or a fourth MC-ASK waveform generation scheme. Signal generation parameters corresponding to the four MC-ASK waveform generation methods are different.

In some embodiments, the generation scheme of MC-FSK waveform includes, but not limited to, at least one of a first MC-FSK waveform generation scheme or a second MC-FSK waveform generation scheme. Signal generation parameters corresponding to the MC-FSK waveform generation schemes are different.

In some embodiments, the signal generation parameter(s) comprises at least one of: a modulation mode used to generate the AMP signal, the number of segments for carrying N subcarriers of the AMP signal, the number of subcarriers included in one segment, a bit-loading manner in one segment, the number of bits carried in one Orthogonal frequency-division multiplexing (OFDM) symbol, guard band information between segments, a subcarrier spacing corresponding to the target signal, a position of the modulated carrier in one segment, or a length of cyclic prefix (CP) in an OFDM symbol.

The specific implementation of the above waveform generation schemes will be described below with examples.

In the following examples, K is the number of points of the Inverse Discrete Fourier Transform (IDFT), N is the number of subcarriers used to transmit the AMP signal, and the AMP signal refers to a signal sent by the AMP device.

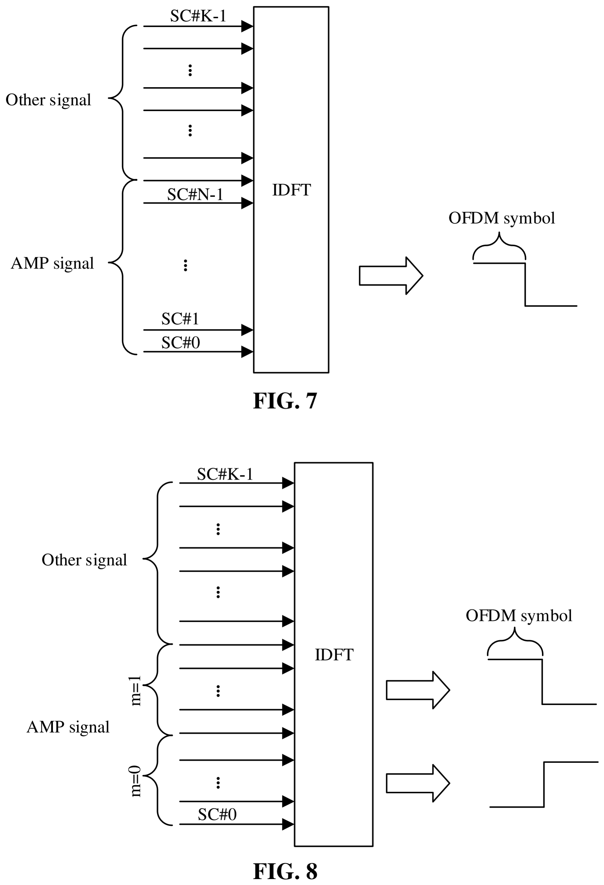

In some embodiments, for the first MC-ASK waveform generation scheme, each OFDM symbol carries 1 bit, in which the corresponding output OOK signal after the subcarrier carrying the AMP signal is modulated and subjected to IDFT is 1, and the corresponding output OOK signal when the subcarrier carrying the AMP signal is zero power is 0. FIG. 7 is a schematic diagram illustrating a generation process of generating an AMP signal based on the first MC-ASK waveform generation scheme.

In some embodiments, for the second MC-ASK waveform generation scheme, each OFDM symbol carries M bits in frequency domain, and N subcarriers carrying the AMP signal are separated into M segments, each segment carrying 1-bit information. In each segment, when all subcarriers are modulated, the corresponding output OOK signal is 1, and when all subcarriers are zero power, the corresponding output OOK signal is 0. FIG. 8 is a schematic diagram illustrating a generation process of generating an AMP signal based on the second MC-ASK waveform generation scheme when M = 2.

In some embodiments, for the third MC-ASK waveform generation scheme, each OFDM symbol carries 1 bit, and N subcarriers carrying the AMP signal are separated into M segments. In the M segments, when one subcarrier in each segment is modulated and the remaining subcarriers are zero power, the corresponding output OOK signal is 1, and when all subcarriers in all segments are zero power, the corresponding output OOK signal is 0.

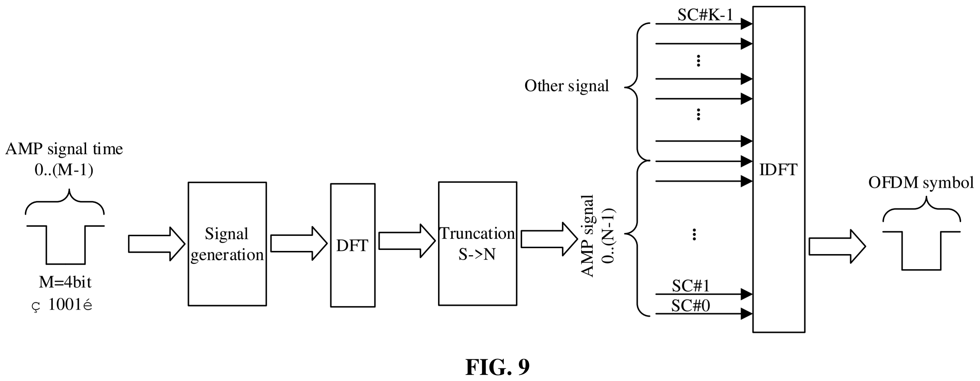

In some embodiments, for the fourth MC-ASK waveform generation scheme, each OFDM symbol carries M bits in time domain, N subcarriers carrying the AMP signal are generated by DFT, the M bits are represented by S samples, and the S samples form S subcarriers by DFT transformation. Further, the S subcarriers are processed through such as truncation to form N subcarriers, and then subjected to IDFT transformation to generate an OOK signal. FIG. 9 is a schematic diagram illustrating a generation process of generating an AMP signal based on the fourth MC-ASK waveform generation scheme when M = 4.

In some embodiments, for the first MC-FSK waveform generation scheme, N subcarriers carrying the AMP signal are separated to M pairs of segments, and in each OFDM symbol, one segment in each pair of segments is modulated and the other segment is zero power.

In some embodiments, for the second MC-FSK waveform generation scheme, N subcarriers carrying the AMP signal are separated to 2^{M} segments, and in each OFDM symbol, one segment from the 2^{M} segments is modulated and the other segments are zero power.

It should be understood that other signals in the examples of FIGS. 7-9 may be existing signals or channels in a communication system, or legacy signals or channels, such as legacy signals or channels in an NR system, or existing signals or frames in a WIFI system, etc.

In some embodiments, the wireless air interface technology supported by the network device may include a wireless air interface technology supported when the network device communicates with the AMP device. For example, the wireless air interface technology may include processing techniques (e.g., modulation techniques, encoding techniques) employed by the network device to generate the AMP signal, communication techniques based on which the AMP signal is transmitted to the AMP device through the wireless air interface, and the like. The wireless air interface technology supported by the network device corresponds to the wireless air interface technology supported by the AMP device to which the network device supports access.

In some embodiments, the wireless air interface technology supported by the network device corresponds to a wireless air interface technology supported by an AMP device of a target type, where the target type is a type of AMP device to which the network device supports access. That is, if the network device supports a certain wireless air interface technology, the network device may support the access to the corresponding type of AMP device.

In some embodiments, the capability information of the network device is transmitted through a first frame. The first frame includes, but not limited to, at least one of a Beacon frame, an Association Response frame, a Reassociation Response frame, or a Probe Response frame. For example, in a WIFI system, capability information of a network device may be transmitted through the first frame.

In some embodiments, the capability information of the network device is carried in a Capabilities Information field of the first frame.

In some embodiments, the capability information of the network device is transmitted by at least one of the following signaling: a system message, a broadcast message, or Radio Resource Control (RRC) signaling.

For example, in a cellular network system, capability information of a network device may be transmitted through a system message, a broadcast message, or RRC signaling.

In some embodiments, the capability information of the network device is transmitted over a first wireless air interface.

In an embodiment, the first wireless air interface is a wireless air interface corresponding to the capability information of the network device, or the first wireless air interface may support a capability related to the capability information of the network device.

In an embodiment, the first wireless air interface is a wireless air interface corresponding to a type of AMP device supported by the network device, or the first wireless air interface is a wireless air interface through which the network device communicates with an AMP device of a target type, where the target type is a type of AMP device supported by the network device.

In some embodiments, the capability information of the network device may be used for the AMP device to select a target network device to establish connection (or, access, association) or used for the AMP device to select a target network device to communicate.

For example, the AMP device may select a target network device to establish connection based on the capability information of the network device, and may further initiate a random access procedure to establish connection with the target network device. Alternatively, the AMP device may select an associated target network device based on the capability information of the network device, and further initiate an association process to associate with the target network device.

In some embodiments of the present disclosure, the method 200 further comprises the operation in S220.

In S220, the AMP device reports capability information of the AMP device to the network device.

Correspondingly, the network device receives the capability information of the AMP device.

In some embodiments, the capability information of the AMP device may include capability information related to power harvesting supported by the AMP device and/or capability information related to a communication mode(s) supported by the AMP device.

In some embodiments, the capability information of the AMP device may be used by the network device to perform access control on the AMP device.

For example, the network device may control to allow or prohibit access of a specific type of AMP device according to the capability information of the AMP device.

As an example, when the network device does not support providing a power sourcing signal, the first-type AMP device is allowed to access, the second-type AMP device and the third-type AMP device are prohibited from accessing, and when the network device supports providing the power sourcing signal, the second-type AMP device and the third-type AMP device are allowed to access.

As another example, when the network device does not support providing a carrier signal, the first-type AMP device and the second-type AMP device are prohibited from accessing, the third type AMP device is allowed to access, and when the network device supports providing the carrier signal, the first-type AMP device and the second-type AMP device are allowed to access.

In some embodiments, the capability information of the AMP device includes at least one of: a type of the AMP device; whether the AMP device has an energy storage capability; an energy source of the AMP device; whether the AMP device supports active transmission; a modulation mode supported by the AMP device; a coding scheme supported by the AMP device; or, a signal generation scheme supported by the AMP device.

In some embodiments, the type of the AMP device may be one of a plurality of AMP device types divided in the manner in the foregoing embodiments.

In some embodiments, the type of the AMP device is one of the first-type AMP device, the second-type AMP device, or the third-type AMP device.

In some embodiments, the capability information of the AMP device is transmitted through a second frame, and the second frame includes at least one of a probe request frame, an association request frame, or a reassociation request frame. For example, in a WIFI system, capability information of an AMP device may be transmitted through the second frame. That is, the AMP device may report the capability information of the AMP device in the association process or in the probe process.

In some embodiments, the capability information of the AMP device is carried in a Capabilities Information field of the second frame.

In some embodiments, the capability information of the AMP device is transmitted to the network device during the random access procedure, or transmitted to the network device after the random access procedure.

In some embodiments, the capability information of the AMP device is reported to the network device through RRC signaling.

For example, an AMP device may perfrom capability reporting through RRC signaling after random access.

In the embodiment of the present disclosure, the network device may send the capability information of the network device to the AMP device, and further, the AMP device may select an appropriate network device to establish connection according to the capability information of the network device, thereby ensuring normal communication between the AMP device and the network device.

In some implementations, the AMP device may report the capability information of the AMP device to the network device, and further, the network device may perform access control on the AMP device based on the capability information of the AMP device, thereby ensuring access of the appropriate AMP device to the network device, and thus ensuring normal communication between the AMP device and the network device.

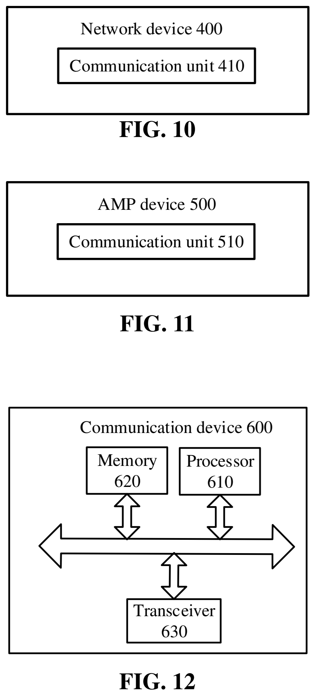

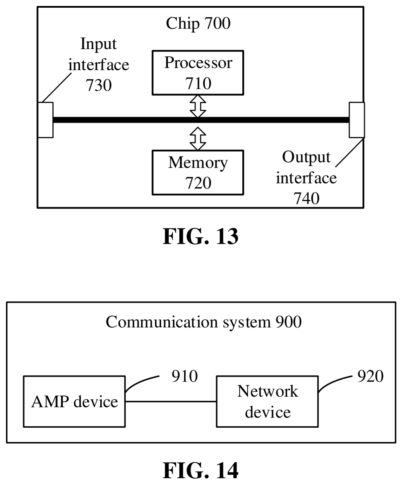

The method embodiments of the present disclosure are described in detail above with reference to FIG. 6 to FIG. 9. The device embodiments of the present disclosure are described in detail below with reference to FIG. 10 and FIG. 14. It is to be understood that the device embodiments correspond the method embodiments, and similar descriptions may be made with reference to the method embodiments.

FIG. 10 illustrates a schematic block diagram of a terminal device 400 according to an embodiment of the present disclosure. As illustrated in FIG. 10, the terminal device 400 includes a communication unit 410.

The communication unit 410 is configured to transmit capability information of the network device to an ambient power (AMP) device.

In some embodiments, the capability information of the network device includes at least one of: a type of AMP devices to which the network device supports access; whether the network device supports providing a power sourcing signal for power harvesting; whether the network device supports providing a carrier signal for backscattering; a modulation mode supported by the network device; a coding scheme supported by the network device; or, a signal generation scheme supported by the network device.

In some embodiments, the type of AMP devices to which the network device supports access includes at least one of a first-type AMP device, a second-type AMP device, or a third-type AMP device.

The first-type AMP device has no energy storage capability and does not support active signal transmission.

The second-type AMP device has the energy storage capability and does not support active signal transmission.

The third-type AMP device has the energy storage capability and supports active signal transmission.

In some embodiments, the capability information of the network device is transmitted through a first frame, and the first frame includes at least one of the following frames: a beacon frame, a probe response frame, an association response frame, or a reassociation response frame.

In some embodiments, the capability information of the network device is carried in a capabilities information field of the first frame.

In some embodiments, the capability information of the network device is transmitted by at least one of the following signaling: a system message, a broadcast message, or RRC signaling.

In some embodiments, the capability information of the network device is transmitted via a first wireless air interface, and the first wireless air interface is a wireless air interface corresponding to the capability information, or a wireless air interface corresponding to a type of AMP device supported by the network device.

In some embodiments, the communication unit 410 is further configured to receive capability information of the AMP device transmitted by the AMP device.

In some embodiments, the capability information of the AMP device includes at least one of: a type of the AMP device; whether the AMP device has an energy storage capability; an energy source of the AMP device; whether the AMP device supports active transmission; a modulation mode supported by the AMP device; a coding scheme supported by the AMP device; or, a signal generation scheme supported by the AMP device.

In some embodiments, the type of the AMP device is one of a first-type AMP device, a second-type AMP device, or a third-type AMP device.

The first-type AMP device has no energy storage capability and does not support active signal transmission.

The second-type AMP device has the energy storage capability and does not support active signal transmission.

The third-type AMP device has the energy storage capability and supports active signal transmission.

In some embodiments, the capability information of the AMP device is transmitted through a second frame, and the second frame includes at least one of a probe request frame, an association request frame, or a reassociation request frame.

In some embodiments, the capability information of the AMP device is carried in a capabilities information field of the second frame.

In some embodiments, the capability information of the AMP device is transmitted to the network device during a random access procedure, or transmitted to the network device after a random access procedure.

In some embodiments, the capability information of the AMP device is reported to the network device through RRC signaling.

In some embodiments, the above communication unit may be a communication interface or a transceiver, or an input/output interface of a communication chip or a system-on-chip.

It should be understood that the network device 400 according to the embodiments of the present disclosure may correspond to the network device in the method embodiments of the present disclosure, and the above-mentioned and other operations and/or functions of each unit of the network device 400 are for implementing the corresponding flow of the network device in the method illustrated in FIG. 6 to FIG. 9, and will not be elaborated herein for the sake of brevity.

FIG. 11 illustrates a schematic block diagram of an AMP device 500 according to an embodiment of the present disclosure. As illustrated in FIG. 11, the AMP device 500 includes a communication unit 510.

The communication unit 510 is configured to receive capability information of a network device transmitted by the network device.

In some embodiments, the capability information of the network device includes at least one of: a type of AMP devices to which the network device supports access; whether the network device supports providing a power sourcing signal for power harvesting; whether the network device supports providing a carrier signal for backscattering; a modulation mode supported by the network device; a coding scheme supported by the network device; or, a signal generation scheme supported by the network device.

In some embodiments, the type of AMP devices to which the network device supports access includes at least one of a first-type AMP device, a second-type AMP device, or a third-type AMP device.

The first-type AMP device has no energy storage capability and does not support active signal transmission.

The second-type AMP device has the energy storage capability and does not support active signal transmission.

The third-type AMP device has the energy storage capability and supports active signal transmission.

In some embodiments, the capability information of the network device is transmitted through a first frame, and the first frame includes at least one of the following frames: a beacon frame, a probe response frame, an association response frame, or a reassociation response frame.

In some embodiments, the capability information of the network device is carried in a capabilities information field of the first frame.

In some embodiments, the capability information of the network device is transmitted by at least one of the following signaling: a system message, a broadcast message, or RRC signaling.

In some embodiments, the capability information of the network device is transmitted via a first wireless air interface, and the first wireless air interface is a wireless air interface corresponding to the capability information, or a wireless air interface corresponding to a type of AMP device supported by the network device.

In some embodiments, the communication unit 510 is further configured to transmit capability information of the AMP device to the network device.

In some embodiments, the capability information of the AMP device includes at least one of: a type of the AMP device; whether the AMP device has an energy storage capability; an energy source of the AMP device; whether the AMP device supports active transmission; a modulation mode supported by the AMP device; a coding scheme supported by the AMP device; or, a signal generation scheme supported by the AMP device.

In some embodiments, the type of the AMP device is one of a first-type AMP device, a second-type AMP device, or a third-type AMP device.

The first-type AMP device has no energy storage capability and does not support active signal transmission.

The second-type AMP device has the energy storage capability and does not support active signal transmission.

The third-type AMP device has the energy storage capability and supports active signal transmission.

In some embodiments, the capability information of the AMP device is transmitted through a second frame, and the second frame includes at least one of a probe request frame, an association request frame, or a reassociation request frame.

In some embodiments, the capability information of the AMP device is carried in a capabilities information field of the second frame.

In some embodiments, the capability information of the AMP device is transmitted to the network device during a random access procedure, or transmitted to the network device after a random access procedure.

In some embodiments, the capability information of the AMP device is reported to the network device through RRC signaling.

In some embodiments, the above-described communication unit may be a communication interface or a transceiver, or an input/output interface of a communication chip or a system-on-chip. The above processing unit may be one or more processors.

It should be understood that the AMP device 500 according to the embodiments of the present disclosure may correspond to the AMP device in the method embodiments of the present disclosure, and the above-mentioned and other operations and/or functions of each unit of the AMP device 500 are for implementing the corresponding flow of the AMP device in the method illustrated in FIG. 6 to FIG. 9, and will not be elaborated herein for the sake of brevity.

FIG. 12 is a schematic structural diagram of a communication device 600 according to an embodiment of the present disclosure. The communication device 600 illustrated in FIG. 12 includes a processor 610. The processor 610 is configured to call a computer program from a memory and run the computer program to implement the methods in the embodiments of the present disclosure.

In an embodiment, as illustrated in FIG. 12, the communication device 600 may further include a memory 620. The processor 610 may call the computer program from the memory 620 and run the computer program to implement the methods in the embodiments of the present disclosure.

The memory 620 may be a separate device independent of the processor 610 or may be integrated into the processor 610.

In an embodiment, as illustrated in FIG. 12, the communication device 600 may further include a transceiver 630. The processor 610 may control the transceiver 630 to communicate with other devices, in particular, to send information or data to other devices, or receive information or data sent by other devices.

The transceiver 630 may include a transmitter and a receiver. The transceiver 630 may further include an antenna. The number of the antennas may be one or more.

In an embodiment, the communication device 600 may specifically be a network device in the embodiments of the present disclosure, and the communication device 600 may implement corresponding processes implemented by the network device in each method of the embodiments of the present disclosure. For simplicity, elaborations are omitted herein.

In an embodiment, the communication device 600 may specifically be an AMP device in the embodiments of the present disclosure, and the communication device 600 may implement corresponding processes implemented by the AMP device in each method of the embodiments of the present disclosure. For simplicity, elaborations are omitted herein.

FIG. 13 is a schematic structural diagram of a chip according to an embodiment of the present disclosure. The chip 700 illustrated in FIG. 13 includes a processor 710, and the processor 710 is configured to call a computer program from a memory and run the computer program to implement the methods in the embodiments of the present disclosure.

In an embodiment, as illustrated in FIG. 13, the chip 700 may further include a memory 720. The processor 710 is configured to call the computer program from the memory 720 and run the computer program to implement the methods in the embodiments of the present disclosure.

The memory 720 may be a separate device independent of the processor 710 or may be integrated into the processor 710.

In an embodiment, the chip 700 may further include an input interface 730. The processor 710 may control the input interface 730 to communicate with other devices or chips, and in particular may acquire information or data from the other devices or chips.

In an embodiment, the chip 700 may further include an output interface 740. The processor 710 may control the output interface 740 to communicate with other devices or chips, and in particular may output information or data to the other devices or chips.

In an embodiment, the chip may be applied to the network device in the embodiments of the present disclosure, and the chip may implement corresponding processes implemented by the network device in each method of the embodiments of the present disclosure. For simplicity, elaborations are omitted herein.

In an embodiment, the chip may be applied to the AMP device in the embodiments of the present disclosure, and the chip may implement corresponding processes implemented by the AMP device in each method of the embodiments of the present disclosure. For simplicity, elaborations are omitted herein.

It is to be understood that the chip mentioned in the embodiments of the present disclosure may also be called a system-level chip, a system chip, a chip system or a system on chip, or the like.

FIG. 14 is a schematic block diagram of a communication system 900 according to an embodiment of the present disclosure. As illustrated in FIG. 9, the communication system 900 includes an AMP device 910 and a network device 920.

The AMP device 910 may be configured to implement the corresponding functions implemented by the AMP device in the above methods, and the network device 920 may be configured to implement the corresponding functions implemented by the network device in the above methods. For simplicity, elaborations are omitted herein.

It should be understood that the processor in the embodiments of the present disclosure may be an integrated circuit chip with a signal processing capability. During implementation, each operation of the above method embodiments may be completed by an integrated logic circuit of hardware in the processor or an instruction in form of software. The processor may be a general-purpose processor, a Digital Signal Processor (DSP), an Application Specific Integrated Circuit (ASIC), a Field Programmable Gate Array (FPGA), or another programmable logical device, discrete gate or transistor logical device and discrete hardware component. Each method, operation and logical block diagram disclosed in the embodiments of the present disclosure may be implemented or executed. The general-purpose processor may be a microprocessor or the processor may also be any conventional processor and the like. The operations of the method disclosed in combination with the embodiments of the present disclosure may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or an electrically erasable programmable memory, and a register. The storage medium is located in a memory, and the processor reads information in the memory, and completes operations of the above methods in combination with hardware thereof.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM and a DR RAM. That is, the memory in the embodiments of the present disclosure is intended to include but not limited to memories of these and any other proper types.

An embodiment of the present disclosure further provides a computer-readable storage medium configured to store a computer program.

In an embodiment, the computer-readable storage medium may be applied to the network device in the embodiments of the present disclosure, and the computer program causes a computer to execute corresponding processes implemented by the network device in each method of the embodiments of the present disclosure. For simplicity, elaborations are omitted herein.

In an embodiment, the computer-readable storage medium may be applied to the mobile terminal/terminal device in the embodiments of the present disclosure, and the computer program causes a computer to execute corresponding processes implemented by to the mobile terminal/terminal device in each method of the embodiments of the present disclosure. For simplicity, elaborations are omitted herein.

An embodiment of the present disclosure further provides a computer program product including computer program instructions.

In an embodiment, the computer program product may be applied to the network device in the embodiments of the present disclosure, and the computer program instructions cause a computer to execute corresponding processes implemented by the network device in each method of the embodiments of the present disclosure. For simplicity, elaborations are omitted herein.

In an embodiment, the computer program product may be applied to the mobile terminal/terminal device in the embodiments of the present disclosure, and the computer program instructions cause a computer to execute corresponding processes implemented by the mobile terminal/terminal device in each method of the embodiments of the present disclosure. For simplicity, elaborations are omitted herein.

An embodiment of the present disclosure further provides a computer program.

In an embodiment, the computer program may be applied to the network device in the embodiments of the present disclosure. The computer program, when run on a computer, enables the computer to execute corresponding processes implemented by the network device in each method of the embodiments of the present disclosure. For simplicity, elaborations are omitted herein.

In an embodiment, the computer program may be applied to the mobile terminal/terminal device in the embodiments of the present disclosure. The computer program, when run on a computer, enables the computer to execute corresponding processes implemented by the mobile terminal/terminal device in each method of the embodiments of the present disclosure. For simplicity, elaborations are omitted herein.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A wireless communication method, comprising:
transmitting, by a network device, capability information of the network device to an ambient power, AMP, device.

2. The method of claim 1, wherein the capability information of the network device comprises at least one of:
a type of AMP devices to which the network device supports access;
whether the network device supports providing a power sourcing signal for power harvesting;
whether the network device supports providing a carrier signal for backscattering;
a modulation mode supported by the network device;
a coding scheme supported by the network device; or,
a signal generation scheme supported by the network device.

3. The method of claim 2, wherein the type of AMP devices to which the network device supports access comprises at least one of a first-type AMP device, a second-type AMP device, or a third-type AMP device, wherein
the first-type AMP device has no energy storage capability and does not support active signal transmission;
the second-type AMP device has an energy storage capability and does not support active signal transmission;
the third-type AMP device has the energy storage capability and supports active signal transmission.

4. The method of any one of claims 1-3, wherein the capability information of the network device is transmitted through a first frame, and the first frame comprises at least one of:
a beacon frame, a probe response frame, an association response frame, or a reassociation response frame.

5. The method of claim 4, wherein the capability information of the network device is carried in a capabilities information field of the first frame.

6. The method of any one of claims 1-3, wherein the capability information of the network device is transmitted by at least one of a system message, a broadcast message, or radio resource control, RRC, signaling.

7. The method of any one of claims 1-6, wherein the capability information of the network device is transmitted via a first wireless air interface, and the first wireless air interface is a wireless air interface corresponding to the capability information, or a wireless air interface corresponding to a type of AMP device supported by the network device.

8. The method of any one of claims 1-7, further comprising:
receiving, by the network device, capability information of the AMP device from the AMP device.

9. The method of claim 8, wherein the capability information of the AMP device comprises at least one of:
a type of the AMP device;
whether the AMP device has an energy storage capability;
an energy source of the AMP device;
whether the AMP device supports active transmission;
a modulation mode supported by the AMP device;
a coding scheme supported by the AMP device; or,
a signal generation scheme supported by the AMP device.

10. The method of claim 9, wherein the type of the AMP device is one of a first-type AMP device, a second-type AMP device, or a third-type AMP device, wherein
the first-type AMP device has no energy storage capability and does not support active signal transmission;
the second-type AMP device has an energy storage capability and does not support active signal transmission;
the third-type AMP device has the energy storage capability and supports active signal transmission.

11. The method of any one of claims 8-10, wherein the capability information of the AMP device is transmitted through a second frame, and the second frame comprises at least one of a probe request frame, an association request frame, or a reassociation request frame.

12. The method of claim 11, wherein the capability information of the AMP device is carried in a capabilities information field of the second frame.

13. The method of any one of claims 8-10, wherein the capability information of the AMP device is transmitted to the network device during a random access procedure, or transmitted to the network device after a random access procedure.

14. The method of claim 13, wherein the capability information of the AMP device is reported to the network device through RRC signaling.

15. A wireless communication method, comprising:
receiving, by an ambient power, AMP, device from a network device, capability information of the network device.

16. The method of claim 1, wherein the capability information of the network device comprises at least one of:
a type of AMP devices to which the network device supports access;
whether the network device supports providing a power sourcing signal for power harvesting;
whether the network device supports providing a carrier signal for backscattering;
a modulation mode supported by the network device;
a coding scheme supported by the network device; or,
a signal generation scheme supported by the network device.

17. The method of claim 16, wherein the type of AMP devices to which the network device supports access comprises at least one of a first-type AMP device, a second-type AMP device, or a third-type AMP device, wherein
the first-type AMP device has no energy storage capability and does not support active signal transmission;
the second-type AMP device has an energy storage capability and does not support active signal transmission;
the third-type AMP device has the energy storage capability and supports active signal transmission.

18. The method of any one of claims 15-17, wherein the capability information of the network device is transmitted through a first frame, and the first frame comprises at least one of:
a beacon frame, a probe response frame, an association response frame, or a reassociation response frame.

19. The method of claim 18, wherein the capability information of the network device is carried in a capabilities information field of the first frame.

20. The method of any one of claims 15-17, wherein the capability information of the network device is transmitted by at least one of a system message, a broadcast message, or radio resource control, RRC, signaling.

21. The method of any one of claims 15-20, wherein the capability information of the network device is transmitted via a first wireless air interface, and the first wireless air interface is a wireless air interface corresponding to the capability information, or a wireless air interface corresponding to a type of AMP device supported by the network device.

22. The method of any one of claims 15-21, further comprising:
transmitting, by the AMP device, capability information of the AMP device to the network device.

23. The method of claim 22, wherein the capability information of the AMP device comprises at least one of:
a type of the AMP device;
whether the AMP device has an energy storage capability;
an energy source of the AMP device;
whether the AMP device supports active transmission;
a modulation mode supported by the AMP device;
a coding scheme supported by the AMP device; or,
a signal generation scheme supported by the AMP device.

24. The method of claim 23, wherein the type of the AMP device is one of a first-type AMP device, a second-type AMP device, or a third-type AMP device, wherein
the first-type AMP device has no energy storage capability and does not support active signal transmission;
the second-type AMP device has an energy storage capability and does not support active signal transmission;
the third-type AMP device has the energy storage capability and supports active signal transmission.

25. The method of any one of claims 22-24, wherein the capability information of the AMP device is transmitted through a second frame, and the second frame comprises at least one of a probe request frame, an association request frame, or a reassociation request frame.

26. The method of claim 25, wherein the capability information of the AMP device is carried in a capabilities information field of the second frame.

27. The method of any one of claims 22-24, wherein the capability information of the AMP device is transmitted to the network device during a random access procedure, or transmitted to the network device after a random access procedure.

28. The method of claim 27, wherein the capability information of the AMP device is reported to the network device through RRC signaling.

29. A network device, comprising:
a communication unit, configured to transmit capability information of the network device to an ambient power, AMP, device.

30. The network device of claim 29, wherein the capability information of the network device comprises at least one of:
a type of AMP devices to which the network device supports access;
whether the network device supports providing a power sourcing signal for power harvesting;
whether the network device supports providing a carrier signal for backscattering;
a modulation mode supported by the network device;
a coding scheme supported by the network device; or,
a signal generation scheme supported by the network device.

31. The network device of claim 30, wherein the type of AMP devices to which the network device supports access comprises at least one of a first-type AMP device, a second-type AMP device, or a third-type AMP device, wherein
the first-type AMP device has no energy storage capability and does not support active signal transmission;
the second-type AMP device has an energy storage capability and does not support active signal transmission;
the third-type AMP device has the energy storage capability and supports active signal transmission.

32. The network device of any one of claims 29-31, wherein the capability information of the network device is transmitted through a first frame, and the first frame comprises at least one of:
a beacon frame, a probe response frame, an association response frame, or a reassociation response frame.

33. The network device of claim 32, wherein the capability information of the network device is carried in a capabilities information field of the first frame.

34. The network device of any one of claims 29-31, wherein the capability information of the network device is transmitted by at least one of a system message, a broadcast message, or radio resource control, RRC, signaling.

35. The network device of any one of claims 29-34, wherein the capability information of the network device is transmitted via a first wireless air interface, and the first wireless air interface is a wireless air interface corresponding to the capability information, or a wireless air interface corresponding to a type of AMP device supported by the network device.

36. The network device of any one of claims 29-35, wherein the communication unit is further configured to receive capability information of the AMP device from the AMP device.

37. The network device of claim 36, wherein the capability information of the AMP device comprises at least one of:
a type of the AMP device;
whether the AMP device has an energy storage capability;
an energy source of the AMP device;
whether the AMP device supports active transmission;
a modulation mode supported by the AMP device;
a coding scheme supported by the AMP device; or,
a signal generation scheme supported by the AMP device.

38. The network device of claim 37, wherein the type of the AMP device is one of a first-type AMP device, a second-type AMP device, or a third-type AMP device, wherein
the first-type AMP device has no energy storage capability and does not support active signal transmission;
the second-type AMP device has an energy storage capability and does not support active signal transmission;
the third-type AMP device has the energy storage capability and supports active signal transmission.

39. The network device of any one of claims 36-38, wherein the capability information of the AMP device is transmitted through a second frame, and the second frame comprises at least one of a probe request frame, an association request frame, or a reassociation request frame.

40. The network device of claim 39, wherein the capability information of the AMP device is carried in a capabilities information field of the second frame.

41. The network device of any one of claims 36-38, wherein the capability information of the AMP device is transmitted to the network device during a random access procedure, or transmitted to the network device after a random access procedure.

42. The network device of claim 41, wherein the capability information of the AMP device is reported to the network device through RRC signaling.

43. An ambient energy, AMP, device, comprising:
a communication unit, configured to receive capability information of a network device transmitted by the network device.

44. The AMP device of claim 43, wherein the capability information of the network device comprises at least one of:
a type of AMP devices to which the network device supports access;
whether the network device supports providing a power sourcing signal for power harvesting;
whether the network device supports providing a carrier signal for backscattering;
a modulation mode supported by the network device;
a coding scheme supported by the network device; or,
a signal generation scheme supported by the network device.

45. The AMP device of claim 44, wherein the type of AMP devices to which the network device supports access comprises at least one of a first-type AMP device, a second-type AMP device, or a third-type AMP device, wherein
the first-type AMP device has no energy storage capability and does not support active signal transmission;
the second-type AMP device has an energy storage capability and does not support active signal transmission;
the third-type AMP device has the energy storage capability and supports active signal transmission.

46. The AMP device of any one of claims 43-45, wherein the capability information of the network device is transmitted through a first frame, and the first frame comprises at least one of:
a beacon frame, a probe response frame, an association response frame, or a reassociation response frame.

47. The AMP device of claim 46, wherein the capability information of the network device is carried in a capabilities information field of the first frame.

48. The AMP device of any one of claims 43-45, wherein the capability information of the network device is transmitted by at least one of a system message, a broadcast message, or radio resource control, RRC, signaling.

49. The AMP device of any one of claims 43-48, wherein the capability information of the network device is transmitted via a first wireless air interface, and the first wireless air interface is a wireless air interface corresponding to the capability information, or a wireless air interface corresponding to a type of AMP device supported by the network device.

50. The AMP device of any one of claims 43-49, wherein the communication unit is further configured to transmitt capability information of the AMP device to the network device.

51. The AMP device of claim 50, wherein the capability information of the AMP device comprises at least one of:
a type of the AMP device;
whether the AMP device has an energy storage capability;
an energy source of the AMP device;
whether the AMP device supports active transmission;
a modulation mode supported by the AMP device;
a coding scheme supported by the AMP device; or,
a signal generation scheme supported by the AMP device.

52. The AMP device of claim 51, wherein the type of the AMP device is one of a first-type AMP device, a second-type AMP device, or a third-type AMP device, wherein
the first-type AMP device has no energy storage capability and does not support active signal transmission;
the second-type AMP device has an energy storage capability and does not support active signal transmission;
the third-type AMP device has the energy storage capability and supports active signal transmission.

53. The AMP device of any one of claims 50-52, wherein the capability information of the AMP device is transmitted through a second frame, and the second frame comprises at least one of a probe request frame, an association request frame, or a reassociation request frame.

54. The AMP device of claim 53, wherein the capability information of the AMP device is carried in a capabilities information field of the second frame.

55. The AMP device of any one of claims 50-52, wherein the capability information of the AMP device is transmitted to the network device during a random access procedure, or transmitted to the network device after a random access procedure.

56. The AMP device of claim 55, wherein the capability information of the AMP device is reported to the network device through RRC signaling.

57. A network device, comprising: a processor and a memory, wherein the memory is configured to store a computer program, and the processor is configured to call and run the computer program stored in the memory to perform the method of any one of claims 1-14.

58. An ambient energy, AMP, device, comprising: a processor and a memory, wherein the memory is configured to store a computer program, and the processor is configured to call and run the computer program stored in the memory to perform the method of any one of claims 15-28.

59. A chip, comprising: a processor configured to call a computer program from a memory and run the computer program, to cause a device equipped with the chip to perform the method of any one of claims 1-14, or perform the method of any one of claims 15-28.

60. A computer-readable storage medium, configured to store a computer program that causes a computer to perform the method of any one of claims 1-14, or perform the method of any one of claims 15-28.

61. A computer program product, comprising computer program instructions that cause a computer to perform the method of any one of claims 1-14, or perform the method of any one of claims 15-28.

62. A computer program, causing a computer to perform the method of any one of claims 1-14, or perform the method of any one of claims 15-28.
